(19) Europäisches Patentamt
European Patent Office
Office européen des brevets

(11) EP 3 039 565 B1

(12) EUROPEAN PATENT SPECIFICATION

(45) Date of publication and mention
of the grant of the patent:
20.03.2019 Bulletin 2019/12

(51) Int Cl.:
$G06F\ 17/00^{(2019.01)}$    $H04L\ 25/03^{(2006.01)}$

(21) Application number: 13854226.1

(22) Date of filing: 21.10.2013

(86) International application number:
PCT/RU2013/000927

(87) International publication number:
WO 2015/060742 (30.04.2015 Gazette 2015/17)

(54) **METHOD FOR RECOVERING A SPARSE COMMUNICATION SIGNAL FROM A RECEIVE SIGNAL**

VERFAHREN ZUR GEWINNUNG EINES SCHWACHEN KOMMUNIKATIONSSIGNALS AUS EINEM EMPFANGSSIGNAL

PROCÉDÉ DE RÉCUPÉRATION DE SIGNAL DE COMMUNICATION PARCIMONIEUX À PARTIR D'UN SIGNAL DE RÉCEPTION

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(43) Date of publication of application:
06.07.2016 Bulletin 2016/27

(73) Proprietor: Huawei Technologies Co., Ltd.
Longgang District
Shenzhen, Guangdong 518129 (CN)

(72) Inventors:
• IVANOV, Vladimir Iosifovich
Shenzhen
Guangdong 518129 (CN)
• ZENG, Yanxing
Shenzhen
Guangdong 518129 (CN)
• SHEN, Jianqiang
Shenzhen
Guangdong 518129 (CN)
• RAPOPORT, Lev Borisovich
Shenzhen
Guangdong 518129 (CN)

(74) Representative: Körber, Martin Hans et al
Mitscherlich PartmbB
Patent- und Rechtsanwälte
Sonnenstrasse 33
80331 München (DE)

(56) References cited:
• LEV RAPOPORT ET AL: "Implementation of quasi-maximum-likelihood detection based on semidefinite relaxation and linear programming", ELECTRICAL & ELECTRONICS ENGINEERS IN ISRAEL (IEEEI), 2012 IEEE 27TH CONVENTION OF, IEEE, 14 November 2012 (2012-11-14), pages 1-5, XP032277752, DOI: 10.1109/EEEI.2012.6376987 ISBN: 978-1-4673-4682-5
• ZHI TIAN ET AL: "Detection of sparse signals under finite-alphabet constraints", ACOUSTICS, SPEECH AND SIGNAL PROCESSING, 2009. ICASSP 2009. IEEE INTERNATIONAL CONFERENCE ON, IEEE, PISCATAWAY, NJ, USA, 19 April 2009 (2009-04-19), pages 2349-2352, XP031459738, ISBN: 978-1-4244-2353-8
• EMMANUEL J CANDÃ ÂS ET AL: "Enhancing Sparsity by Reweighted â 1 Minimization", JOURNAL OF FOURIER ANALYSIS AND APPLICATIONS, BIRKHÄUSER-VERLAG, BO, vol. 14, no. 5-6, 15 October 2008 (2008-10-15), pages 877-905, XP019657474, ISSN: 1531-5851, DOI: 10.1007/S00041-008-9045-X

**Description**

<u>TECHNICAL FIELD</u>

The invention relates to sparse signal recovery, in particular the recovery of sparse communication signals taking coefficients from a 3-ary alphabet.

<u>BACKGROUND OF THE INVENTION</u>

Signal recovery problems arise in digital data communications and other related fields. In communication signal recovery problems, the coefficients of the communication signal are detected or recovered based on coefficients of a receive signal. Usually, knowledge of a corresponding linear channel model is assumed.
In some applications, the number of receive signal coefficients is greater than or equal to the number of communication signal coefficients to be detected. Methods like zero force (ZF), minimum mean square error (MMSE), or maximum likelihood detection (MLD) can be used to solve this problem.
In other applications, the number of receive signal coefficients is less than the number of communication signal coefficients to be detected. The trade-off for the reduced number of receive signal coefficients is sparseness of the recovered communication signal. Sparseness means that zeros dominate among the coefficients of the communication signal.
Sparse communication signals taking coefficients from a 3-ary alphabet, e.g. the {-1, 0, 1} alphabet, with dominating zeros are of increasing interest for many applications. However, there exists no efficient scheme for recovery of sparse communication signals from a 3-ary alphabet.
In E.J. Candes, and T. Tao, "Decoding by linear programming," IEEE Trans. on Information Theory, vol.51, no. 12, pp. 4203-4215, Dec. 2005, the problem of sparse signal recovery from incomplete measurements is investigated.
In P.H. Tan and L.K. Rasmussen, "The application of semidefinite programming for detection in CDMA," IEEE Journal on Select. Areas Commun., v. 19, no. 8, pp. 1442-1449, Aug. 2001, a semi-definite relaxation (SDR) method is exploited for a binary detection problem. Similarly, LEV RAPOPORT ET AL: "Implementation of quasi-maximum-likelihood detection based on semidefinite relaxation and linear programming",ELECTRICAL & ELECTRONICS ENGINEERS IN ISRAEL (IEEEI), 2012 IEEE 27TH CONVENTION OF, IEEE, 14 November 2012 (2012-11-14), pages 1-5, and ZHI TIAN ET AL: "Detection of sparse signals under finite-alphabet constraints", ACOUSTICS, SPEECH AND SIGNAL PROCESSING, 2009. ICASSP 2009. IEEE INTERNATIONAL CONFERENCE ON, IEEE, PISCATAWAY, NJ, USA, 19 April 2009 (2009-04-19), pages 2349-2352 discuss SDR methods for binary signals.

<u>SUMMARY OF THE INVENTION</u>

It is the object of the invention to provide an efficient scheme for recovery of sparse communication signals taking coefficients from a 3-ary alphabet.
This object is achieved by the features of the independent claims. Further implementation forms are apparent from the dependent claims, the description and the figures.
The invention is based on the finding that a relaxation approach using auxiliary signals can be employed.
According to a first aspect, the invention relates to a method for recovering a sparse communication signal from a receive signal, the receive signal being a channel output version of the sparse communication signal, the channel comprising channel coefficients being arranged to form a channel matrix, the sparse communication signal being a 3-ary signal which takes coefficients from a {-1, 0, 1} alphabet, the method comprising determining a first auxiliary signal from the channel matrix and the receive signal, the first auxiliary signal comprising first auxiliary signal coefficients, determining a second auxiliary signal from the channel matrix and the receive signal, the second auxiliary signal comprising second auxiliary signal coefficients, the second auxiliary signal coefficients indicating a sparsity of the first auxiliary signal coefficients, zeroing first auxiliary signal coefficients if corresponding second auxiliary signal coefficients are smaller than or equal to a predetermined threshold, and rounding first auxiliary signal coefficients in dependency of the signs of first auxiliary signal coefficients if corresponding second auxiliary signal coefficients are greater than a predetermined threshold, wherein determining the first auxiliary signal and/or determining the second auxiliary signal is based on a semi-definite relaxation approach, and the semi-definite relaxation approach comprises constructing a Q-matrix on the basis of the channel matrix and the receive signal. Thus, the sparse communication signal can efficiently be recovered from the receive signal, a sign-dependent recovery of the sparse communication signal can be achieved, and the first auxiliary signal and/or the second auxiliary signal can be determined efficiently.
The sparse communication signal can be represented by a vector. The sparse communication signal can comprise sparsely distributed communication signal coefficients.
The receive signal can be represented by a vector. The receive signal can comprise receive signal coefficients.

The receive signal coefficients can be real numbers, e.g. 0.9 or 1.2.

The channel can comprise a linear relationship between the sparse communication signal and the receive signal. The channel can further comprise additive noise. The channel coefficients can be real numbers, e.g. 0.3 or 1.5.

The first auxiliary signal can be represented by a vector. The first auxiliary signal can comprise first auxiliary signal coefficients. The first auxiliary signal coefficients can be real numbers, e.g. 0.7 or 1.1.

The second auxiliary signal can be represented by a vector. The second auxiliary signal can comprise second auxiliary signal coefficients. The second auxiliary signal coefficients can be real numbers, e.g. 0.8 or 1.3.

The predetermined threshold can be a real number, e.g. 0.7.

Determining the first auxiliary signal and determining the second auxiliary signal can be performed in a joint manner, e.g. in a single procedure.

Zeroing first auxiliary signal coefficients can relate to an assignment of a zero value or level to a first auxiliary signal coefficient.

Rounding first auxiliary signal coefficients can relate to an assignment of a predetermined value or level to a first auxiliary signal coefficient in dependency of the sign of the first auxiliary signal coefficient. The predetermined value or level can be a real number, e.g. -1 or 1.

In a first implementation form according to the first aspect as such, the sparse communication signal comprises sparsely distributed communication signal coefficients and the receive signal comprises receive signal coefficients, and the number of sparsely distributed communication signal coefficients is greater than the number of receive signal coefficients. Thus, the number of receive signal coefficients can be reduced.

In a second implementation form according to the first aspect as such, the Q-matrix has the form:

$$Q = \begin{bmatrix} H^T H & -H^T y \\ -y^T H & y^T y \end{bmatrix}$$

wherein y denotes the receive signal, H denotes the channel matrix, and Q denotes the Q-matrix. Thus, the Q-matrix can be further processed efficiently.

In a third implementation form according to the first aspect as such or any preceding implementation form of the first aspect, determining the first auxiliary signal and/or determining the second auxiliary signal is based on a semi-definite relaxation approach, and the semi-definite relaxation approach further comprises constructing a Z-matrix on the basis of the first auxiliary signal and the second auxiliary signal. Thus, the first auxiliary signal and/or the second auxiliary signal can be determined efficiently.

In a fourth implementation form according to the third implementation form of the first aspect, the Z-matrix has the form:

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \quad Z^T = Z.$$

wherein $x_1$ to $x_n$ denote first auxiliary signal coefficients, $s_1$ to $s_n$ denote second auxiliary signal coefficients, $z_{ij}$ denote further coefficients, and Z denotes the Z-matrix. Thus, the Z-matrix can be further processed efficiently.

In a fifth implementation form according to the first aspect as such or any one of the first implementation form of the first aspect to the fourth implementation form of the first aspect, the semi-definite relaxation approach further comprises calculating a trace of the product of the Z-matrix and the Q-matrix. Thus, a squared error measure can be determined efficiently.

In a sixth implementation form according to the first aspect as such or any preceding implementation form of the first aspect, determining the first auxiliary signal and/or determining the second auxiliary signal is performed according to the following equations:

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \quad Z^T = Z, \quad Q = \begin{bmatrix} H^T H & -H^T y \\ -y^T H & y^T y \end{bmatrix},$$

$$\text{trace}(ZQ) \leq \delta^2,$$

$$-s_i \leq x_i \leq s_i, \quad 0 \leq s_i \leq 1$$

$$e^T s \rightarrow \min$$

wherein Z denotes a Z-matrix, $x_1$ to $x_n$ denote first auxiliary signal coefficients, $s_1$ to $s_n$ denote second auxiliary signal coefficients, $z_{ij}$ denote further coefficients, Q denotes a Q-matrix, y denotes the receive signal, H denotes the channel matrix, $\delta$ denotes an error threshold, e denotes a vector comprising all units, and s denotes the second auxiliary signal. Thus, an optimization method can be applied for determining the first auxiliary signal and/or the second auxiliary signal.

The optimization method can comprise a semi-definite programming method, e.g. an interior point method. The semi-definite constraint Z≥0 can mean that the matrix Z is semi-definite positive. The last constraint can be convex, but may be not linear.

In a seventh implementation form according to the first aspect as such or the first implementation form of the first aspect to the fifth implementation form of the first aspect, determining the first auxiliary signal and/or determining the second auxiliary signal is performed according to the following equations:

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \quad Z^T = Z, \quad Q = \begin{bmatrix} H^T H & -H^T y \\ -y^T H & y^T y \end{bmatrix}.$$

$$\text{trace}(ZQ) \leq \delta^2,$$

$$-s_i \leq x_i \leq s_i, \quad 0 \leq s_i \leq 1$$

$$w^T s \rightarrow \min,$$

wherein Z denotes a Z-matrix, $x_1$ to $x_n$ denote first auxiliary signal coefficients, $s_1$ to $s_n$ denote second auxiliary signal coefficients, $z_{ij}$ denote further coefficients, Q denotes a Q-matrix, y denotes the receive signal, H denotes the channel matrix, $\delta$ denotes an error threshold, w denotes a weighting vector, and s denotes the second auxiliary signal. Thus, an optimization method can be applied for determining the first auxiliary signal and/or the second auxiliary signal.

The optimization method can comprise a semi-definite programming method, e.g. an interior point method. The semi-definite constraint Z≥0 can mean that the matrix Z is semi-definite positive. The last constraint can be convex, but may be not linear.

In an eighth implementation form according to the seventh implementation form of the first aspect, determining the first auxiliary signal and/or determining the second auxiliary signal is repeated until a stopping criterion is met, and the weighing vector is iteratively re-calculated according to the following equation:

$$w_i^{(k+1)} := \frac{1}{\left(\beta^k + s_i^{*(k)}\right)^{1-p}}$$

wherein $w_i$ denotes a weighing vector coefficient, $s_i^*$ denotes a second auxiliary signal coefficient, k denotes an iteration index, p denotes a first predetermined parameter, and $\beta$ denotes a second predetermined parameter. Thus, the first auxiliary signal and/or the second auxiliary signal can be determined more precisely.

The first predetermined parameter p can be a real number, e.g. 0.3.

The second predetermined parameter $\beta$ can be a real number, e.g. 0.1.

In a ninth implementation form according to the eighth implementation form of the first aspect, the stopping criterion is a predetermined number of iterations. Thus, a static stopping criterion can be realized.

The predetermined number of iterations can be a natural number, e.g. 4 or 8.

In a tenth implementation form according to the eighth implementation form of the first aspect or the ninth implementation form of the first aspect, the stopping criterion is a convergence condition of the first auxiliary signal and/or the second auxiliary signal. Thus, an adaptive stopping criterion can be realized.

The convergence condition can relate to a decreasing deviation of the first auxiliary signal and/or the second auxiliary signal with respect to a first auxiliary signal and/or a second auxiliary signal of a previous iteration.

In a eleventh implementation form according to the first aspect as such or any preceding implementation form of the first aspect, zeroing first auxiliary signal coefficients and/or rounding first auxiliary signal coefficients is performed according to the following equations:

$$x_i^r = 0 \quad \text{if} \quad s_i^* \leq \alpha,$$

$$x_i^r = \text{sign}(x_i^*) \quad \text{otherwise,}$$

wherein $x_i^*$ denotes a first auxiliary signal coefficient, $s_i^*$ denotes a second auxiliary signal coefficient, $\alpha$ denotes the predetermined threshold, and $x_i^r$ denotes a recovered sparsely distributed communication signal coefficient. Thus, zeroing first auxiliary signal coefficients and/or rounding first auxiliary signal coefficients can be performed efficiently.

According to a second aspect, the invention relates to a computer program for performing the method according to the first aspect as such or any preceding implementation form of the first aspect when executed on a computer. Thus, the method can be performed in an automatic and repeatable manner.

The computer program can be provided in form of a machine-readable code. The computer program can comprise a series of commands for a processor of the computer. The processor of the computer can be configured to execute the computer program.

The computer can comprise a processor, a memory, and/or an input/output means.

The invention can be implemented in hardware and/or software.

Further embodiments of the invention will be described with respect to the following figures, in which:

Fig. 1 shows a schematic diagram of a method for recovering a sparse communication signal from a receive signal;
Fig. 2 shows a schematic diagram of a semi-definite programming (SDP) method;
Fig. 3 shows a comparator with a dead zone in the measurement system;
Fig. 4 shows a dead zone in sign-like sensors;
Fig. 5 shows a hysteresis via Schmitt trigger avoiding chattering in switching control systems;
Fig. 6 shows a hysteresis via Schmitt trigger avoiding chattering in switching control systems; and
Fig. 7 shows a phase portrait of a second order PLL illustrating the nature of a cycle slip.

<u>DETAILED DESCRIPTION OF EMBODIMENTS OF THE INVENTION</u>

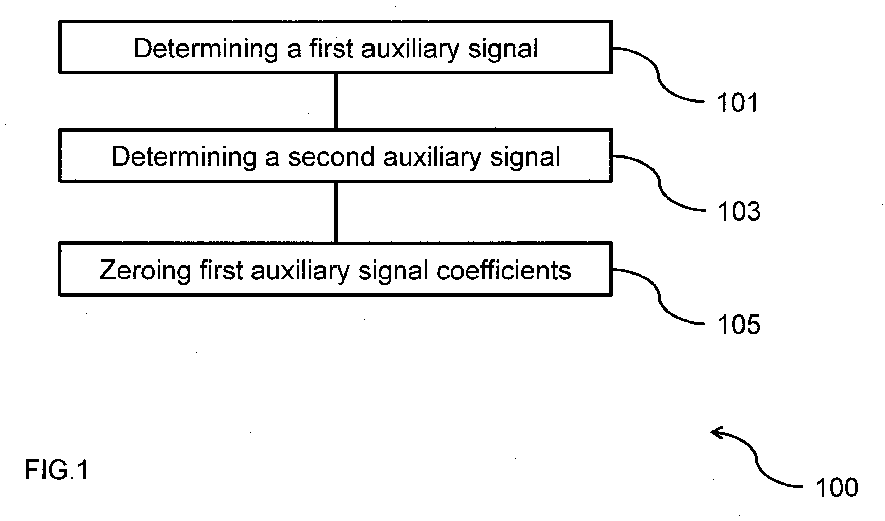

Fig. 1 shows a schematic diagram of a method 100 for recovering a sparse communication signal from a receive signal, the receive signal being a channel output version of the sparse communication signal, the channel comprising channel coefficients being arranged to form a channel matrix, the sparse communication signal being a 3-ary signal.

The method 100 comprises determining 101 a first auxiliary signal from the channel matrix and the receive signal, the first auxiliary signal comprising first auxiliary signal coefficients, determining 103 a second auxiliary signal from the channel matrix and the receive signal, the second auxiliary signal comprising second auxiliary signal coefficients, the second auxiliary signal coefficients indicating a sparsity of the first auxiliary signal coefficients, and zeroing 105 first auxiliary signal coefficients if corresponding second auxiliary signal coefficients are smaller than or equal to a predetermined threshold.

The sparse communication signal can be represented by a vector. The sparse communication signal can comprise sparsely distributed communication signal coefficients. The sparsely distributed communication signal coefficients can be taken from a 3-ary alphabet, e.g. the {-1, 0, 1} alphabet.

The receive signal can be represented by a vector. The receive signal can comprise receive signal coefficients. The receive signal coefficients can be real numbers, e.g. 0.9 or 1.2.

The channel can comprise a linear relationship between the sparse communication signal and the receive signal. The channel can further comprise additive noise. The channel coefficients can be real numbers, e.g. 0.3 or 1.5.

The 3-ary signal can relate to a signal taking coefficients from three finite values or levels. The 3-ary signal can e.g. relate to a signal taking coefficients from a {-1, 0, 1} alphabet.

The first auxiliary signal can be represented by a vector. The first auxiliary signal can comprise first auxiliary signal coefficients. The first auxiliary signal coefficients can be real numbers, e.g. 0.7 or 1.1.

The second auxiliary signal can be represented by a vector. The second auxiliary signal can comprise second auxiliary signal coefficients. The second auxiliary signal coefficients can be real numbers, e.g. 0.8 or 1.3.

The predetermined threshold can be a real number, e.g. 0.7.

Determining 101 the first auxiliary signal and determining 103 the second auxiliary signal can be performed in a joint manner, e.g. in a single procedure.

Zeroing 105 first auxiliary signal coefficients can relate to an assignment of a zero value or level to a first auxiliary signal coefficient.

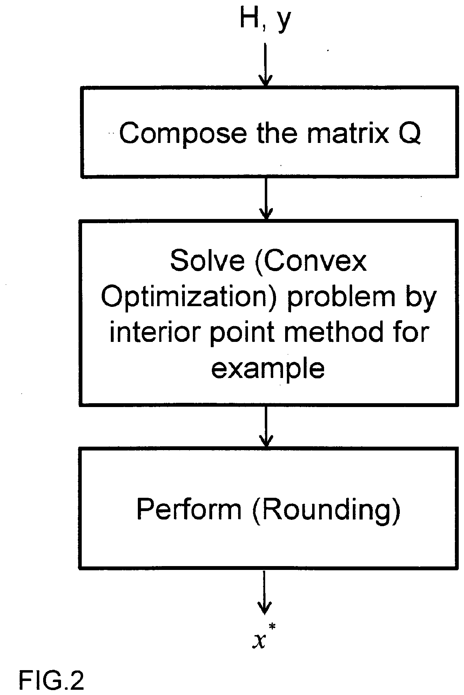

Fig. 2 shows a schematic diagram of a semi-definite programming (SDP) method.

The present invention relates to sparse signal detection, especially the detection of signals taking values from finite alphabet with one of symbols dominating over others.

Binary detection problems arise in digital data communication and other related fields. Usually, formulation of the binary detection problem assumes knowledge of the linear channel model

$$y = Hx + \varepsilon , \qquad (1)$$

where $H$ is the channel matrix, $x$ is the $n$-dimensional vector of binary symbols to be detected, symbols take values -1 or 1, $y$ is the $m$-dimensional vector of observables or received signal, and $\varepsilon$ is the vector of noise samples.

Generally, the number of observable parameters $m$ is greater or equal to the number of symbols to be detected, i.e. $m \geq n$. Methods like zero force (ZF), minimum mean square error (MMSE), maximum likelihood detection (MLD) can be used to solve this problem. Given assumption of the Gaussian noise with covariance matrix $C$, MLD solves the optimization problem

$$x^* = \arg \min_{x \in \{-1,1\}^n} \|y - Hx\|_{C^{-1}}^2 , \qquad (2)$$

where $\|r\|_W^2 = r^T W r$ is the weighted Euclidean norm square. The MLD method as well as its variations like spherical detector (SD) are exponentially hard. In order to get rid of the exponential complexity of the MLD method, preserving high bit error rate (BER) performance semi-definite relaxation (SDR) approaches can be used.

SDR methods assume reduction of the binary detection problem in its relaxed form to the semi-definite programming which is polynomially hard. Numerical analysis shows practical identity of the BER performance obtained by MLD and SDR, while advantages of SDR in reducing the computational complexity become obvious starting with dimension of several tens of binary symbols.

A reduced number of observables can be used for recovery of the received data. In other words, $m$ can be less or even significantly less than $n$. The trade-off for reducing the number of measurements is sparseness of the vectors $x$. Sparseness means that zeros dominate among the entries of the signal.

In sparse vector reconstruction, the vector $x$ to be reconstructed is not necessarily supposed to be binary, being real- or complex-valued vector. However, sparse and binary signals can occur simultaneously.

In many applications sparse signals, taking values $x \in \{-1,0,1\}^n$ with dominating zeros appear as shown in several examples.

Two properties, binary nature of the significant (non-zero) symbols and sparseness (zero dominating) can be treated together. The problem can be formulated as reconstruction or recovery of sparse signals, taking values $x \in \{-1,0,1\}^n$ with dominating zeros, from incomplete (or under-determined) set of measurements.

A particular method of solution would include two steps. A first step of determination of the correct support set

$$S = \{i : x_i \neq 0\} ,$$

using methods already known in the art, and a second step of solution of the binary detection problem for the vector $x$ consisting of variables that belong to S

$$x_S^* = \arg \min_{x_S \in \{-1,1\}^{n_S}} \|y - H_S x_S\|_{C^{-1}}^2$$

where the matrix $H_S$ consists of columns $H_j$ with indices belonging to the set $S$ and $n_S$ is the number of indices in the set $S$.

However, there exist more intelligent methods replacing both steps and combining them in a single numerical scheme that outperforms the aforementioned two-step solution.

This can be achieved by introduction of auxiliary variables controlling sparseness, using the semi-definite relaxation approach, reduction of the problem to the special convex optimization problem (allowing for solution in the polynomial time) and minimizing the sum of auxiliary variables, with subsequent rounding the auxiliary variables.

The semi-definite relaxation (SDR) method can be exploited for the binary detection problem, obeying near MLD performance in terms of BER vs. SNR, preserving polynomial computational complexity.

The problem of sparse signals recovery from incomplete measurements algorithms based on the linear programming (LP) and orthogonal matching pursuit (OMP) can be used. LP results in higher empiric probability of the correct recovery than OMP, while OMP outperforms LP in terms of computational complexity.

The problem of recovery of sparse signals from the incomplete measurements can also be considered for the case of the alphabet $\{-1,1\}$.

Let introduce the binary variables $s_i \in \{0,1\}$ controlling sparseness of the vector $x$.

Namely, let $s_i = x_i^2$ with the following identities satisfied

$$s_i^2 = s_i, x_i s_i = x_i$$

Following the semi-definite relaxation approach denote $X = xx^T$ resulting in the identity

$$\|Hx - y\|^2 = \operatorname{trace}\left(\begin{bmatrix} X & x \\ x^T & 1 \end{bmatrix} \times \begin{bmatrix} H^T H & -H^T y \\ -y^T H & y^T y \end{bmatrix}\right).$$

Here and after, the weight matrix $C^{-1}$ is supposed to be identity which can be easily reached by simple scaling.

Let s be the vector consisting of auxiliary variables, and e be the vector consisting of all units. With these notations the problem can be represented in the equivalent form

$$Z = \begin{bmatrix} X & x \\ x^T & 1 \end{bmatrix} \geq 0, \quad Q = \begin{bmatrix} H^T H & -H^T y \\ -y^T H & y^T y \end{bmatrix},$$

$$X - xx^T = 0, \quad \operatorname{trace}(ZQ) \leq \delta^2,$$

$$x_i \in \{-1,0,1\}, \quad x_i^2 = s_i,$$

$$e^T s \to \min$$

where $\delta$ is the constant related to the a priori knowledge of the magnitude of the noise.

Note that the matrix $X$ has the entries $x_i^2$ on the main diagonal, which can be replaced by $s_i$. So, the matrix Z can be replaced by

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \quad Z^T = Z.$$

Relaxing conditions $X = xx^T$ to the weaker form

$$X - xx^T \geq 0, \qquad (2)$$

and relaxing conditions $x_i \in \{-1,0,1\}$, $x_i^2 = s_i$, to the weaker form

$$-s_i \leq x_i \leq s_i, \ 0 \leq s_i \leq 1 \qquad (3)$$

arrive at the convex optimization problem

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \ Z^T = Z, \ Q = \begin{bmatrix} H^T H & -H^T y \\ -y^T H & y^T y \end{bmatrix},$$

$$\mathrm{trace}(ZQ) \leq \delta^2,$$

$$-s_i \leq x_i \leq s_i, \ 0 \leq s_i \leq 1$$

$$e^T s \to \min \qquad (P)$$

which is the convex optimization problem with the semi-definite (SD) constraint that can be solved.

Let $x^*$, $s^*$ be solution of the optimization problem (P) presented above. Finally the entries of the reconstructed vector are defined according to the following rounding rule

$$x_i^r = 0 \ \ \mathrm{if} \ \ s_i^* \leq \alpha,$$

$$x_i^r = \mathrm{sign}(x_i^*) \ \ \mathrm{otherwise}, \qquad (R)$$

$\alpha > 0$ is the constant of the algorithm.

In the cost function subject to minimization $e^T s = \sum_{i=1}^{n} s_i$ in the problem (P) weights are all units. More intelligent approach consists in the iterative re-weighing of the variables $s_i$ substituting the cost function in (P) by the following one:

$$w^T s = \sum_{i=1}^{n} w_i s_i \to \min \qquad (W)$$

The re-weighing strategy can be used to approximate the $l_p$-optimization with linear constraints.

To better perform sparse recovery, maintaining the finite $\{-1,0,1\}$ alphabet nature of the problem come to the following $l_p$ minimization problem with convex constraints:

$$Z \geq 0, \text{ constructed as shown in } (1),$$
$$\text{trace}(ZQ) \leq \delta^2,$$
$$-s_i \leq x_i \leq s_i, \ 0 \leq s_i \leq 1$$
$$\|s\|_p \to \min. \tag{$P_p$}$$

The problem ($P_p$) has non-convex cost function. Having in mind attempt to approximate it with series of convex optimization problems, combine the problem (P) with (W) resulting in the problem

$$Z \geq 0, \text{ constructed as shown in } (1),$$
$$\text{trace}(ZQ) \leq \delta^2,$$
$$-s_i \leq x_i \leq s_i, \ 0 \leq s_i \leq 1$$
$$w^T s \to \min, \tag{WP}$$

and finally get the following new algorithm including solution of the problem (WP) and iterative re-weighing using certain parameters $0 < p < 1$ and small $\beta > 0$ as shown below:

$$k = 0, \ w^{(0)} = e$$
$$\text{while(stopping\_criterion)}$$
$$\{$$
$$\quad \text{solution of the problem (WP) resulting in } x^{*(k)}, s^{*(k)}$$
$$\quad w_i^{(k+1)} := \frac{1}{\left(\beta^k + s_i^{*(k)}\right)^{1-p}}$$
$$\quad k := k + 1$$
$$\}\tag{RWP}$$

For sufficiently small values of $\beta$, solution of the algorithm (RWP) tends to the solution of the $l_p$ minimization problem ($P_p$). Finally, after the stopping criterion is met, application of the rounding scheme (R) concludes computations.

The stopping criterion can formulated as:

Convergence condition with respect to the variables $x^{*(k)}$, $s^{*(k)}$ ;
Finite number of iterations, 3 for example.

Re-weighing can be applied to the linear programming, while in the invention this scheme can be combined with SDP approach.

In an implementation form, the invention relates to the recovery of sparse signals from a {-1, 0, 1} alphabet.

Words consisting of symbols from {-1, 0, 1} alphabet and zeros dominating over -1/+1, e.g. "00000000001000-100000000001000000001000000000000-1000" can be considered.

Let the channel model be linear $Hx = y$, $H \in R^{m \times n}$, $y \in R^m$, $x \in R^n$ with incomplete measurements $m < n$.

It is a challenge to recover the sparse signals from an under-determined (or incomplete) measurement model subject to the $x \in \{-1,0,1\}^n$ (*) constraint. It is therefore desirable to find most sparse solution to the linear system, assuming that there exists at least one, subject to (*).

Let the measurement model be $y = Hx + \varepsilon$, $x \in R^n$, $y \in R^m$ with number of measurements $m$ significantly less than the length $n$ of the binary word $x$. Suppose that a-priori information about sparseness of the word $x$ is known, not more than $k$ letters are non-zero and take values -1,+1. Other $n$-$k$ bits take values 0. In other words,

$x_i = 0$ for $i \notin \text{supp}(x)$, $x_i = \pm 1$ for $i \in \text{supp}(x)$, $\text{card}(\text{supp}(x)) \leq k$.

Following the basis pursuit approach, arrive at the problem:

$$\left\| y - Hx \right\|_2^2 \leq \delta, \quad x \in \left\{ -1,0,1 \right\}^n$$

$$\left| x \right|_1 \rightarrow \min,$$

Let introduce the binary variables $s_i \in \{0,1\}$ controlling sparseness of the vector $x$. Namely, let $s_i = x_i^2$. The following conditions also hold $s_i^2 = s_i$, $s_i x_i = x_i$.

Following the semi-definite relaxation approach, denote:

$$X = xx^T \quad \Rightarrow \left\| Hx - y \right\|^2 = \text{trace}\left( \begin{bmatrix} X & x \\ x^T & 1 \end{bmatrix} \times \begin{bmatrix} H^T H & -H^T y \\ -y^T H & y^T y \end{bmatrix} \right)$$

(rank one condition). The problem takes the equivalent form

$$Z = \begin{bmatrix} X & x \\ x^T & 1 \end{bmatrix}, \quad Q = \begin{bmatrix} H^T H & -H^T y \\ -y^T H & y^T y \end{bmatrix},$$

$$X - xx^T = 0, \quad \text{trace}(ZQ) \leq \delta, \quad x \in \left\{ -1,0,1 \right\}^n,$$

$$\left| x \right| \rightarrow \min$$

Relaxing the condition $X = xx^T$ to the weaker form $X - xx^T \geq 0$, arrive at the following relaxed problem:

$$Z = \begin{bmatrix} X & x \\ x^T & 1 \end{bmatrix} \geq 0, \quad \text{trace}(ZQ) \leq \delta, \quad \left\{ -1,0,1 \right\}^n, \left| x \right| \rightarrow \min$$

Taking into account $s_i = x_i^2$ replace diagonal of the matrix $Z$ by $s_i$:

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \quad Z^T = Z.$$

The problem is then relaxed to the weaker form:

$$Z \geq 0, \quad Z^T = Z,$$

$$0 \leq s_i \leq 1, \quad -s_i \leq x_i \leq s_i, \quad i = 1,\ldots,n,$$

$$\text{trace}(ZQ) \leq \delta, \qquad\qquad\qquad \text{(Convex Optimization)}$$

$$\sum_{i=1}^{n} s_i \rightarrow \min$$

which is the convex optimization problem with the semi-definite (SD) constraint. It can be solved by standard methods. Then the entries of the vector $x$ are reconstructed as follows. $\alpha$ is some positive threshold parameter, $\alpha = 0.5 - 0.7$ for

example.

$$x_i^* = 0 \quad \text{if} \quad s_i \leq \alpha,$$
$$x_i^* = \text{sign}(x_i) \quad \text{otherwise.} \qquad \text{(Rounding)}$$

This approach can be enhanced by using $l_p$ optimization.

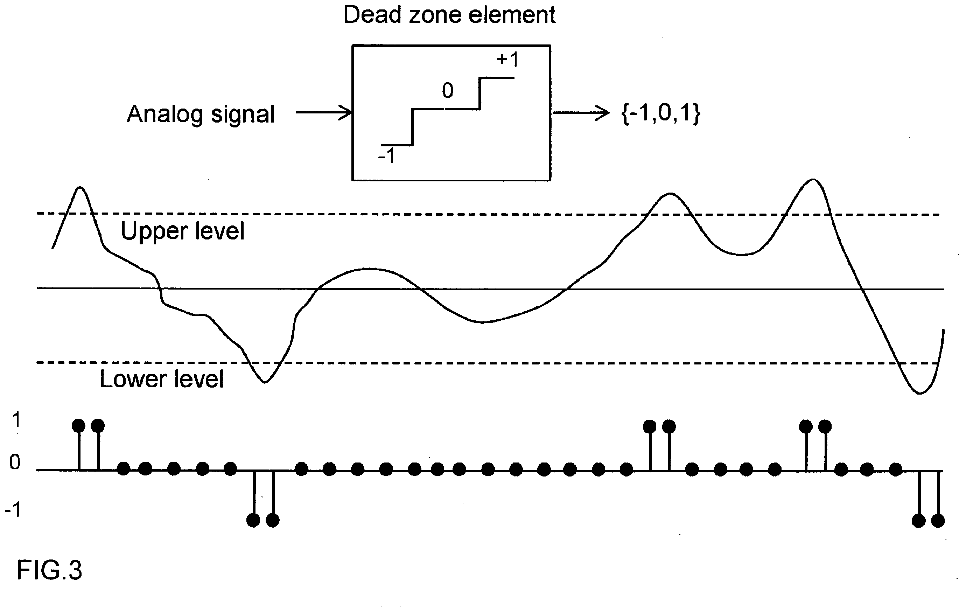

Fig. 3 shows a comparator with a dead zone in the measurement system.

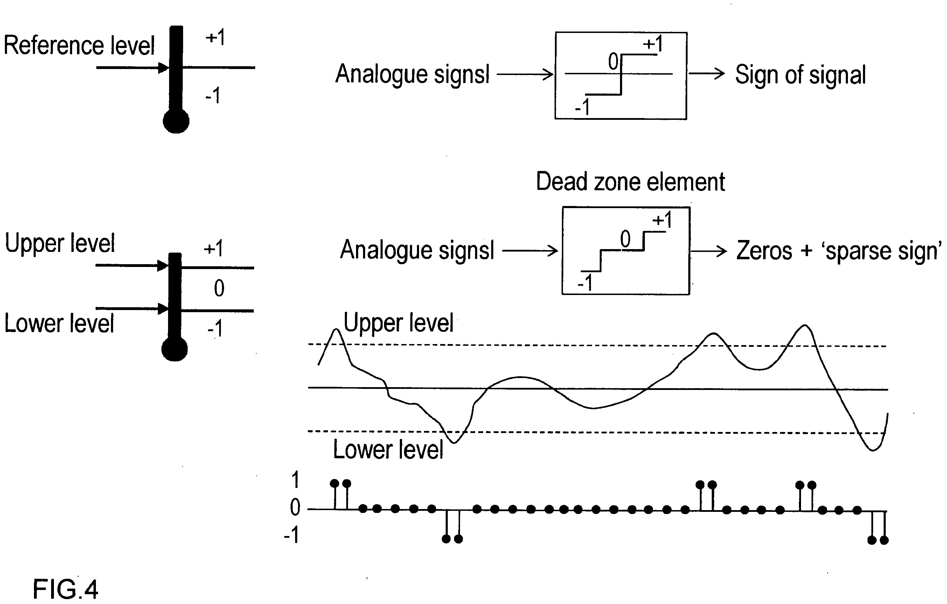

Fig. 4 shows a dead zone in sign-like sensors.

A two-level comparator with a dead zone is used to report exceeding the upper or lower threshold in a measurement system. The comparator reports zero if the measured quantity belongs to the dead zone between two levels. The dead zone device is often used to avoid a high frequency chattering around the single switching threshold. The chattering can affect behavior of the closed loop control systems with a comparator in the loop.

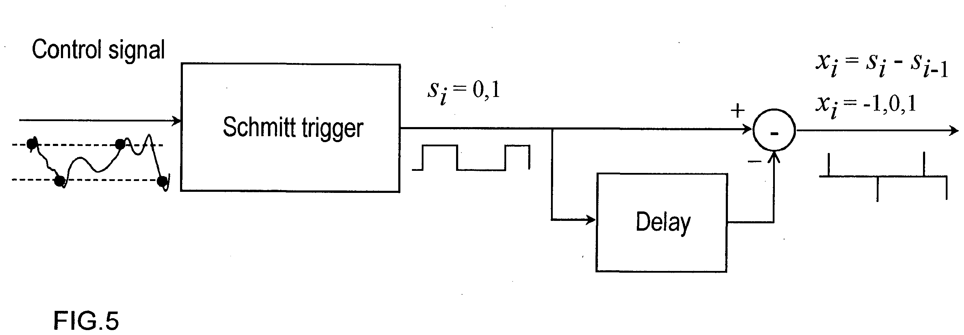

Fig. 5 shows a hysteresis via Schmitt trigger avoiding chattering in switching control systems.

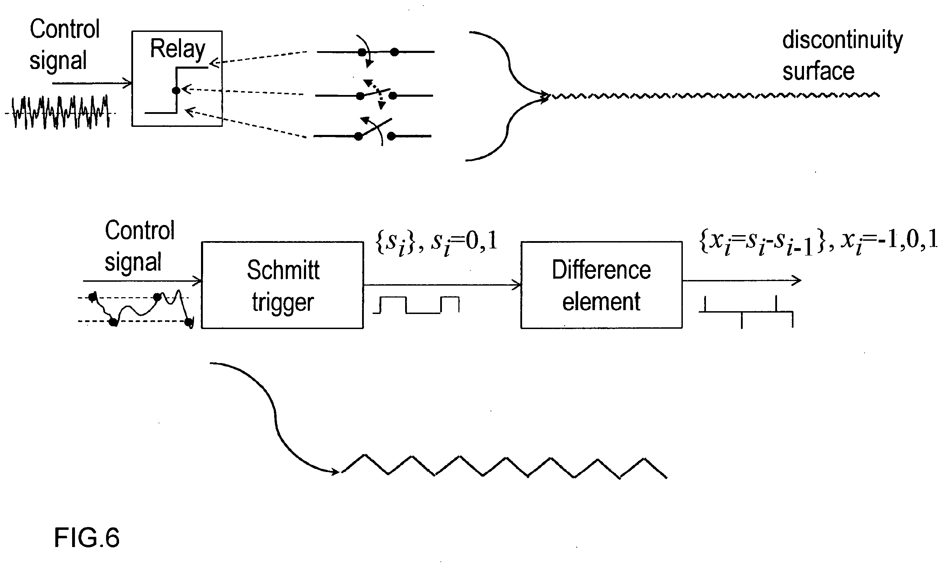

Fig. 6 shows a hysteresis via Schmitt trigger avoiding chattering in switching control systems.

Chattering in the closed loop control systems with relay control can be avoided. The Schmitt trigger implements the hysteresis loop which physically can be realized by bi-metallic plate for example. Switching of the trigger from the zero state to the unit state ('set') happens when the analogue control crosses the upper margin in the upward direction. The switch from unit to zero ('reset') happens when the control crosses the lower margin in the downward direction. The discrete time difference is used to represent the state variation in time. The 'set' switching is represented by the symbol + 1. The 'reset' switching is represented by the symbol -1. The zero value represents the fact that the state remains unchanged. An avoidance of the 'chattering' phenomenon in discontinuous switching control systems can be achieved.

Zero values dominate in the preceding examples if the thresholds differ significantly.

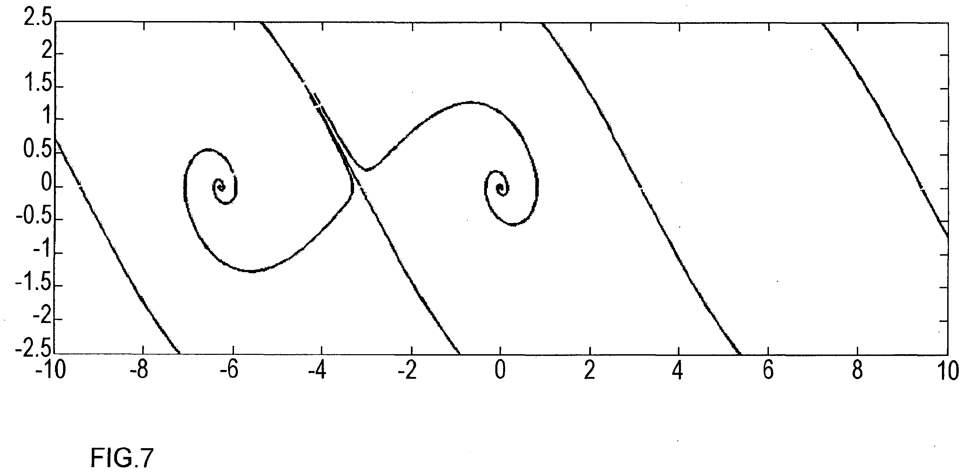

Fig. 7 shows a phase portrait of a second order PLL illustrating the nature of a cycle slip. The figure can relate to a plus/minus one cycle slip detection in a bank of PLLs.

This figure illustrates an application of compressive sensing to error correction. The measurements right hand side vector of the over-determined (generally) linear system can be affected by sparse vector of rough outliers. The least square solution does not leave chances to correctly detect and isolate them, producing badly distorted solution and the residual vector. The compressive sensing approach enables for correct detection of outliers, assuming that redundancy is high enough. Rough outliers happen in the bank of phase locked-loops (PLLs) if so called cycle slips happen to them.

Such banks appear for example in Global Navigation Satellite System GNSS receivers tracking carrier phases of signals received from plurality of GNSS satellites. When moving through partially covered areas, the receiver antenna can experience partial shading for short time causing $\pm$ 1 cycle slips for some small number like 2-3 of the satellites, while all others say 12 satellites remain not affected. So, the vector of outliers has entries -1,0,1, with dominating values 0.

In satellite receivers, each of $n$ satellites is tracked by a separate channel. Each channel contains PLL tracking a carrier phase measurement. Carrier phase incremental between sequential time instances (integrated Doppler frequency) is connected with velocity of the receiver $\frac{1}{\lambda} H' v \Delta t = \Delta \Phi$ where $H'$ is the direction cosines matrix. That is true if only PLLs work in the settled mode and there is no jumps to the adjacent stable points (no cycle slips). If it happens, the carrier phase incremental may take additionally +1 cycle or -1 cycle. Let $d$ be the vector of cycle slips. Zeros will dominate if PLLs mainly are settled. Sometimes there will be small number of +1 or -1. We have $\frac{\Delta t}{\lambda} H' v + d = \Delta \Phi$.

Let $A'$ be the 'kill matrix' with $A'H'=0$. Then $A'd = b$, $A' \in R^{(n-4) \times n}$, $d \in \{-1,0,1\}^n$, and zeros dominate.

In an implementation form, the invention relates to a method for recovery of sparse signals from an {-1,0,1} alphabet.

In an implementation form, the invention relates to a method for recovery of sparse signals from a finite {-1,0,1} alphabet using semi-definite programming relaxation.

In an implementation form, the invention is based on auxiliary variables controlling sparseness, using a semi-definite relaxation approach, a reduction of the problem to a special convex optimization problem (allowing for solution in the polynomial time), and minimizing the sum of auxiliary variables, with subsequent rounding the auxiliary variables.

In an implementation form, the invention relates to a method for recovery of sparse signals consisting of symbols from the set {-1,0,1} with dominating 0, using an under-determined set of measurements.

In an implementation form, the invention is based on reducing the initial problem to the one or series of optimization by construction of a matrix Z of the form (1), and applying relaxations (2) and (3).

In an implementation form, the invention is based on a solution of the problem (P) or series of optimization problems (RWP).

In an implementation form, the invention is based on applying a rounding rule (R).

In an implementation form, the optimization problem is semi-definite convex (P).

In an implementation form, the series of optimization problems (RWP) consists in sequential solution of the problem (WP) until a stopping criterion is met, which can be a convergence condition with respect to the variables of the optimization problem (WP), and/or a finite number of iterations.

In an implementation form, the semi-definite programming method comprises a simplex method. The simplex method may not solve the semi-definite problem directly. The simplex method may not be applicable straightforward.

## Claims

1. Method (100) for recovering a sparse communication signal from a receive signal, the receive signal being a channel output version of the sparse communication signal, the channel comprising channel coefficients being arranged to form a channel matrix, the sparse communication signal being a 3-ary signal which takes coefficients from a {-1, 0, 1} alphabet, the method (100) comprising:

   determining (101) a first auxiliary signal from the channel matrix and the receive signal, the first auxiliary signal comprising first auxiliary signal coefficie#nts;
   determining (103) a second auxiliary signal from the channel matrix and the receive signal, the second auxiliary signal comprising second auxiliary signal coefficients, the second auxiliary signal coefficients indicating a sparsity of the first auxiliary signal coefficients;
   zeroing (105) first auxiliary signal coefficients if corresponding second auxiliary signal coefficients are smaller than or equal to a predetermined threshold; and
   rounding first auxiliary signal coefficients in dependency of the signs of first auxiliary signal coefficients if corresponding second auxiliary signal coefficients are greater than a predetermined threshold;
   wherein determining (101) the first auxiliary signal or determining (103) the second auxiliary signal is based on a semi-definite relaxation approach, and wherein the semi-definite relaxation approach comprises constructing a Q-matrix on the basis of the channel matrix and the receive signal.

2. Method (100) according to claim 1, wherein the sparse communication signal comprises sparsely distributed communication signal coefficients and the receive signal comprises receive signal coefficients, and wherein the number of sparsely distributed communication signal coefficients is greater than the number of receive signal coefficients.

3. Method (100) according to claim 1, wherein the Q-matrix has the form:

$$Q = \begin{bmatrix} H^T H & -H^T y \\ -y^T H & y^T y \end{bmatrix}$$

   wherein y denotes the receive signal, H denotes the channel matrix, and Q denotes the Q-matrix.

4. Method (100) according to any of the preceding claims, wherein determining (101) the first auxiliary signal or determining (103) the second auxiliary signal is based on a semi-definite relaxation approach, and wherein the semi-definite relaxation approach further comprises constructing a Z-matrix on the basis of the first auxiliary signal and the second auxiliary signal.

5. Method (100) according to claim 4, wherein the Z-matrix has the form:

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \quad Z^T = Z.$$

   wherein $x_1$ to $x_n$ denote first auxiliary signal coefficients, $s_1$ to $s_n$ denote second auxiliary signal coefficients, $z_{ij}$

denote further coefficients, and Z denotes the Z-matrix.

**6.** Method (100) according to any of the claims 1 to 5, wherein the semi-definite relaxation approach further comprises calculating a trace of the product of the Z-matrix and the Q-matrix.

**7.** Method (100) according to any of the preceding claims, wherein determining (101) the first auxiliary signal or determining (103) the second auxiliary signal is performed according to the following equations:

$$
Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \quad Z^T = Z, \quad Q = \begin{bmatrix} H^T H & -H^T y \\ -y^T H & y^T y \end{bmatrix},
$$

$$
\mathrm{trace}(ZQ) \leq \delta^2,
$$

$$
-s_i \leq x_i \leq s_i, \ 0 \leq s_i \leq 1
$$

$$
e^T s \rightarrow \min
$$

wherein Z denotes a Z-matrix, $x_1$ to $x_n$ denote first auxiliary signal coefficients, $s_1$ to $s_n$ denote second auxiliary signal coefficients, $z_{ij}$ denote further coefficients, Q denotes a Q-matrix, y denotes the receive signal, H denotes the channel matrix, $\delta$ denotes an error threshold, e denotes a vector comprising all units, and s denotes the second auxiliary signal.

**8.** Method (100) according to any of the claims 1 to 6, wherein determining (101) the first auxiliary signal or determining (103) the second auxiliary signal is performed according to the following equations:

$$
Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \quad Z^T = Z, \quad Q = \begin{bmatrix} H^T H & -H^T y \\ -y^T H & y^T y \end{bmatrix}.
$$

$$
\mathrm{trace}(ZQ) \leq \delta^2,
$$

$$
-s_i \leq x_i \leq s_i, \ 0 \leq s_i \leq 1
$$

$$
w^T s \rightarrow \min,
$$

wherein Z denotes a Z-matrix, $x_1$ to $x_n$ denote first auxiliary signal coefficients, $s_1$ to $s_n$ denote second auxiliary signal coefficients, $z_{ij}$ denote further coefficients, Q denotes a Q-matrix, y denotes the receive signal, H denotes the channel matrix, $\delta$ denotes an error threshold, w denotes a weighting vector, and s denotes the second auxiliary signal.

**9.** Method (100) according to claim 8, wherein determining (101) the first auxiliary signal or determining (103) the second auxiliary signal is repeated until a stopping criterion is met, and wherein the weighing vector is iteratively re-calculated according to the following equation:

$$
w_i^{(k+1)} := \frac{1}{\left(\beta^k + s_i^{*(k)}\right)^{1-p}}
$$

wherein $w_i$ denotes a weighing vector coefficient, $s_i^*$ denotes a second auxiliary signal coefficient, k denotes an iteration index, p denotes a first predetermined parameter, and $\beta$ denotes a second predetermined parameter.

**10.** Method (100) according to claim 9, wherein the stopping criterion is a predetermined number of iterations.

11. Method (100) according to claim 9 or 10, wherein the stopping criterion is a convergence condition of the first auxiliary signal or the second auxiliary signal.

12. Method (100) according to any of the preceding claims, wherein zeroing (105) first auxiliary signal coefficients or rounding first auxiliary signal coefficients is performed according to the following equations:

$$x_i^r = 0 \quad \text{if} \quad s_i^* \le \alpha,$$

$$x_i^r = \text{sign}(x_i^*) \quad \text{otherwise,}$$

wherein $x_i^*$ denotes a first auxiliary signal coefficient, $s_i^*$ denotes a second auxiliary signal coefficient, $\alpha$ denotes the predetermined threshold, and $x_i^r$ denotes a recovered sparsely distributed communication signal coefficient.

13. Computer program for performing the method (100) according to any of the preceding claims when executed on a computer.

**Patentansprüche**

1. Verfahren (100) zum Rückgewinnen eines schwachen Kommunikationssignals von einem Empfangssignal, wobei das Empfangssignal eine Kanalausgangsversion des schwachen Kommunikationssignals ist, der Kanal Kanalkoeffizienten umfasst, die angeordnet sind, um eine Kanalmatrix zu bilden, das schwache Kommunikationssignal ein ternäres Signal ist, das Koeffizienten von einem {-1,0,1}-Alphabet annimmt, wobei das Verfahren (100) umfasst:

Bestimmen (101) eines ersten Hilfssignals aus der Kanalmatrix und dem Empfangssignal, wobei das erste Hilfssignal erste Hilfssignalkoeffizienten umfasst;
Bestimmen (103) eines zweiten Hilfssignals aus der Kanalmatrix und dem Empfangssignal, wobei das zweite Hilfssignal zweite Hilfssignalkoeffizienten umfasst, wobei die zweiten Hilfssignalkoeffizienten eine Schwäche der ersten Hilfssignalkoeffizienten angeben;
Nullstellen (105) erster Hilfssignalkoeffizienten, falls dazugehörige zweite Hilfssignalkoeffizienten kleiner als ein vorbestimmter Schwellenwert oder gleich einem vorbestimmten Schwellenwert sind; und
Runden erster Hilfssignalkoeffizienten in Abhängigkeit von den Vorzeichen von ersten Hilfssignalkoeffizienten, falls dazugehörige zweite Hilfssignalkoeffizienten größer als ein vorbestimmter Schwellenwert sind;
wobei das Bestimmen (101) des ersten Hilfssignals oder das Bestimmen (103) des zweiten Hilfssignals auf einem semidefiniten Relaxationsansatz basieren und wobei der semidefinite Relaxationsansatz das Konstruieren einer Q-Matrix auf der Basis der Kanalmatrix und des Empfangssignals umfasst.

2. Verfahren (100) nach Anspruch 1, wobei das schwache Kommunikationssignal schwach verteilte Kommunikationssignalkoeffizienten umfasst und das Empfangssignal Empfangssignalkoeffizienten umfasst und wobei die Anzahl schwach verteilter Kommunikationssignalkoeffizienten größer ist als die Anzahl von Empfangssignalkoeffizienten.

3. Verfahren (100) nach Anspruch 1, wobei die Q-Matrix die Form aufweist:

$$Q = \begin{bmatrix} H^T H & -H^T y \\ -y^T H & y^T y \end{bmatrix}$$

wobei y das Empfangssignal bezeichnet, H die Kanalmatrix bezeichnet und Q die Q-Matrix bezeichnet.

4. Verfahren (100) nach einem der vorstehenden Ansprüche, wobei das Bestimmen (101) des ersten Hilfssignals oder das Bestimmen (103) des zweiten Hilfssignals auf einem semidefiniten Relaxationsansatz basiert und wobei der semidefinite Relaxationsansatz weiter das Konstruieren einer Z-Matrix auf der Basis des ersten Hilfssignals und des zweiten Hilfssignals umfasst.

5. Verfahren (100) nach Anspruch 4, wobei die Z-Matrix die Form aufweist:

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \quad Z^T = Z.$$

wobei $x_1$ bis $x_n$ erste Hilfssignalkoeffizienten bezeichnen, $s_1$ bis $s_n$ zweite Hilfssignalkoeffizienten bezeichnen, zij weitere Koeffizienten bezeichnet und Z die Z-Matrix bezeichnet.

6. Verfahren (100) nach einem der Ansprüche 1 bis 5, wobei der semidefinite Relaxationsansatz weiter das Berechnen einer Spur des Produkts der Z-Matrix und der Q-Matrix umfasst.

7. Verfahren (100) nach einem der vorstehenden Ansprüche, wobei das Bestimmen (101) des ersten Hilfssignals oder das Bestimmen (103) des zweiten Signals entsprechend den folgenden Gleichungen durchgeführt wird:

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \quad Z^T = Z, \quad Q = \begin{bmatrix} H^T H & -H^T y \\ -y^T H & y^T y \end{bmatrix},$$

$$\text{Spur}(ZQ) \leq \delta^2,$$
$$-s_i \leq x_i \leq s_i, \quad 0 \leq s_i \leq 1$$
$$e^T s \rightarrow \min$$

wobei Z eine Z-Matrix bezeichnet, $x_1$ bis $x_n$ erste Hilfssignalkoeffizienten bezeichnen, $s_1$ bis $s_n$ zweite Hilfssignal-koeffizienten bezeichnen, $z_{ij}$ weitere Koeffizienten bezeichnet, Q eine Q-Matrix bezeichnet, y das Empfangssignal bezeichnet, H die Kanalmatrix bezeichnet, $\delta$ einen Fehlerschwellenwert bezeichnet, e einen Vektor, umfassend alle Einheiten, bezeichnet und s das zweite Hilfssignal bezeichnet.

8. Verfahren (100) nach einem der Ansprüche 1 bis 6, wobei das Bestimmen (101) des ersten Hilfssignals oder das Bestimmen (103) des zweiten Hilfssignals entsprechend den folgenden Gleichungen durchgeführt werden:

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \quad Z^T = Z, \quad Q = \begin{bmatrix} H^T H & -H^T y \\ -y^T H & y^T y \end{bmatrix},$$

$$\text{Spur}(ZQ) \leq \delta^2,$$
$$-s_i \leq x_i \leq s_i, \quad 0 \leq s_i \leq 1$$
$$w^T s \rightarrow \min,$$

wobei Z eine Z-Matrix bezeichnet, $x_1$ bis $x_n$ erste Hilfssignalkoeffizienten bezeichnen, $s_1$ bis $s_n$ zweite Hilfssignal-koeffizienten bezeichnen, $z_{ij}$ weitere Koeffizienten bezeichnet, Q eine Q-Matrix bezeichnet, y das Empfangssignal bezeichnet, H die Kanalmatrix bezeichnet, $\delta$ einen Fehlerschwellenwert bezeichnet, w einen Gewichtungsvektor bezeichnet und s das zweite Hilfssignal bezeichnet.

9. Verfahren (100) nach Anspruch 8, wobei das Bestimmen (101) des ersten Hilfssignals oder das Bestimmen (103) des zweiten Hilfssignals wiederholt werden, bis ein Stoppkriterium erfüllt ist, und wobei der Gewichtungsvektor iterativ gemäß der folgenden Gleichung neu berechnet wird:

$$w_i^{(k+1)} := \frac{1}{\left(\beta^k + s_i^{*(k)}\right)^{1-P}}$$

wobei $w_i$ einen Gewichtungsvektorkoeffizienten bezeichnet, $s_i^*$ einen zweiten Hilfssignalkoeffizienten bezeichnet, k einen Iterationsindex bezeichnet, p einen ersten vorbestimmten Parameter bezeichnet und $\beta$ einen zweiten vorbestimmten Parameter bezeichnet.

10. Verfahren (100) nach Anspruch 9, wobei das Stoppkriterium eine vorbestimmte Anzahl von Iterationen ist.

11. Verfahren (100) nach Anspruch 9 oder 10, wobei das Stoppkriterium eine Konvergenzbedingung des ersten Hilfssignals oder des zweiten Hilfssignals ist.

12. Verfahren (100) nach einem der vorstehenden Ansprüche, wobei das Nullstellen (105) der ersten Hilfssignalkoeffizienten oder das Runden der ersten Hilfssignalkoeffizienten entsprechend den folgenden Gleichungen durchgeführt wird:

$$x_i^r = 0 \ \text{falls} \ \ s_i^* \leq \alpha,$$

$$x_i^r = \text{sign}(x_i^*) \ \text{anderenfalls,}$$

wobei $x_i^*$ einen ersten Hilfssignalkoeffizienten bezeichnet, $s_i^*$ einen zweiten Hilfssignalkoeffizienten bezeichnet, $\alpha$ den vorbestimmten Schwellenwert bezeichnet und $x_i^r$ einen zurückgewonnenen schwach verteilten Kommunikationssignalkoeffizienten bezeichnet.

13. Rechnerprogramm zum Durchführen des Verfahrens (100) nach einem der vorstehenden Ansprüche bei Ausführung auf einem Rechner.

**Revendications**

1. Procédé (100) de récupération d'un signal de communication parcimonieux à partir d'un signal de réception, le signal de réception étant une version de sortie de canal du signal de communication parcimonieux, le canal comprenant des coefficients de canal conçus pour former une matrice de canaux, le signal de communication parcimonieux étant un signal ternaire qui extrait les coefficients d'un alphabet {-1, 0, 1}, le procédé (100) consistant à :

déterminer (101) un premier signal auxiliaire à partir de la matrice de canaux et du signal de réception, le premier signal auxiliaire comprenant des premiers coefficients de signal auxiliaire ;
déterminer (103) un second signal auxiliaire à partir de la matrice de canaux et du signal de réception, le second signal auxiliaire comprenant des seconds coefficients de signal auxiliaire, les seconds coefficients de signal auxiliaire indiquant une parcimonie des premiers coefficients de signal auxiliaire ;
mettre à zéro (105) les premiers coefficients de signal auxiliaire si les seconds coefficients de signal auxiliaire correspondants sont inférieurs ou égaux à un seuil prédéterminé ; et
arrondir les premiers coefficients de signal auxiliaire selon les signes des premiers coefficients de signal auxiliaire si les seconds coefficients de signal auxiliaire correspondants sont supérieurs à un seuil prédéterminé ;
la détermination (101) du premier signal auxiliaire ou la détermination (103) du second signal auxiliaire étant basée sur une approche de relaxation semidéfinie, l'approche de relaxation semidéfinie consistant à construire une matrice Q sur la base de la matrice de canaux et du signal de réception.

2. Procédé (100) selon la revendication 1, dans lequel le signal de communication parcimonieux comprend des coefficients de signal de communication distribués avec parcimonie, et le signal de réception comprend des coefficients de signal de réception, et dans lequel le nombre de coefficients de signal de communication distribués avec parcimonie est supérieur au nombre de coefficients de signal de réception.

3. Procédé (100) selon la revendication 1, dans lequel la matrice *Q* a la forme :

$$Q = \begin{bmatrix} H^T H & -H^T y \\ -y^T H & y^T y \end{bmatrix},$$

où $y$ représente le signal de réception, $H$ représente la matrice de canaux et $Q$ représente la matrice $Q$.

**4.** Procédé (100) selon l'une quelconque des revendications précédentes, dans lequel la détermination (101) du premier signal auxiliaire ou la détermination (103) du second signal auxiliaire est basée sur une approche de relaxation semidéfinie, l'approche de relaxation semidéfinie consistant en outre à construire une matrice $Z$ sur la base du premier signal auxiliaire et du second signal auxiliaire.

**5.** Procédé 100 selon la revendication 4, dans lequel la matrice $Z$ a la forme :

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \, Z^T = Z,$$

où $x_1$ à $x_n$ représentent les premiers coefficients de signal auxiliaire, $s_1$ à $s_n$ représentent les seconds coefficients de signal auxiliaire, $z_{ij}$ représentent d'autres coefficients et $Z$ représente la matrice $Z$.

**6.** Procédé (100) selon l'une quelconque des revendications 1 à 5, dans lequel l'approche de relaxation semidéfinie consiste en outre à calculer une trace du produit de la matrice $Z$ et de la matrice $Q$.

**7.** Procédé (100) selon l'une quelconque des revendications précédentes, dans lequel la détermination (101) du premier signal auxiliaire ou la détermination (103) du second signal auxiliaire est réalisée selon les équations suivantes :

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \, Z^T = Z, \, Q = \begin{bmatrix} H^T H & -H^T y \\ -y^T H & y^T y \end{bmatrix},$$

$$\text{trace}(ZQ) \leq \delta^2,$$

$$-s_i \leq x_i \leq s_i, \, 0 \leq s_i \leq 1,$$

$$e^T s \rightarrow \min,$$

où $Z$ représente une matrice $Z$, $x_1$ à $x_n$ représentent les premiers coefficients de signal auxiliaire, $s_1$ à $s_n$ représentent les seconds coefficients de signal auxiliaire, $z_{ij}$ représentent d'autres coefficients, $Q$ représente une matrice $Q$, $y$ représente le signal de réception, $H$ représente la matrice de canaux, $\delta$ représente un seuil d'erreur, $e$ représente un vecteur comprenant toutes les unités et $s$ représente le second signal auxiliaire.

**8.** Procédé (100) selon l'une quelconque des revendications 1 à 6, dans lequel la détermination (101) du premier signal auxiliaire ou la détermination (103) du second signal auxiliaire est réalisée selon les équations suivantes :

$$Z = \begin{bmatrix} s_1 & \cdots & z_{1n} & x_1 \\ \vdots & \ddots & \vdots & \vdots \\ z_{n1} & \cdots & s_n & x_n \\ x_1 & \cdots & x_n & 1 \end{bmatrix} \geq 0, \, Z^T = Z, \, Q = \begin{bmatrix} H^T H & -H^T y \\ -y^T H & y^T y \end{bmatrix},$$

$$\text{trace}(ZQ) \leq \delta^2,$$

$$-s_i \leq x_i \leq s_i, \, 0 \leq s_i \leq 1,$$

$$w^T s \rightarrow \min,$$

où $Z$ représente une matrice $Z$, $x_1$ à $x_n$ représentent les premiers coefficients de signal auxiliaire, $s_1$ à $s_n$ représentent les seconds coefficients de signal auxiliaire, $z_{ij}$ représentent d'autres coefficients, $Q$ représente une matrice $Q$, $y$ représente le signal de réception, $H$ représente la matrice de canaux, $\delta$ représente un seuil d'erreur, $w$ représente un vecteur de pondération et $s$ représente le second signal auxiliaire.

9.  Procédé (100) selon la revendication 8, dans lequel la détermination (101) du premier signal auxiliaire ou la détermination (103) du second signal auxiliaire est répétée jusqu'à ce qu'un critère d'arrêt soit satisfait, et dans lequel le vecteur de pondération est recalculé de manière itérative selon l'équation suivante :

$$w_i^{(k+1)} = \frac{1}{\left(\beta^k + s_i^{*(k)}\right)^{1-p}}$$

où $w_i$ représente un coefficient de vecteur de pondération, $s_i^*$ représente un second coefficient de signal auxiliaire, $k$ représente un indice d'itération, $p$ représente un premier paramètre prédéterminé et $\beta$ représente un second paramètre prédéterminé.

10. Procédé (100) selon la revendication 9, dans lequel le critère d'arrêt est un nombre prédéterminé d'itérations.

11. Procédé (100) selon la revendication 9 ou 10, dans lequel le critère d'arrêt est une condition de convergence du premier signal auxiliaire ou du second signal auxiliaire.

12. Procédé (100) selon l'une quelconque des revendications précédentes, dans lequel la mise à zéro (105) des premiers coefficients de signal auxiliaire ou l'arrondissement des premiers coefficients de signal auxiliaire est réalisé(e) selon les équations suivantes :

$$x_i^r = 0 \text{ si } s_i^* \leq \alpha,$$

$$x_i^r = \text{sign}(x_i^*) \text{ sinon,}$$

où $x_i^*$ représente un premier coefficient de signal auxiliaire, $s_i^*$ représente un second coefficient de signal auxiliaire, $\alpha$ représente le seuil prédéterminé et $x_i^r$ représente un coefficient de signal de communication distribué avec parcimonie récupéré.

13. Programme informatique permettant de réaliser le procédé (100) selon l'une quelconque des revendications précédentes lorsqu'il est exécuté sur un ordinateur.

EP 3 039 565 B1

```
┌─────────────────────────────────────────────┐
│      Determining a first auxiliary signal     │
└─────────────────────────────────────────────┘
                                              ⌒ 101
┌─────────────────────────────────────────────┐
│     Determining a second auxiliary signal     │
└─────────────────────────────────────────────┘
                                              ⌒ 103
┌─────────────────────────────────────────────┐
│    Zeroing first auxiliary signal coefficients │
└─────────────────────────────────────────────┘
                                              ⌒ 105
```

FIG.1

⌒ 100

H, y

Compose the matrix Q

Solve (Convex Optimization) problem by interior point method for example

Perform (Rounding)

$x^*$

FIG.2

FIG.3

Reference level    +1
                   -1

Analogue signsl → [ 0 / +1 / -1 ] → Sign of signal

Dead zone element

Analogue signsl → [ +1 / 0 / -1 ] → Zeros + 'sparse sign'

Upper level    +1
               0
Lower level    -1

Upper level

Lower level

1
0
-1

FIG.4

EP 3 039 565 B1

FIG.5

EP 3 039 565 B1

FIG.6

EP 3 039 565 B1

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **E.J. CANDES ; T. TAO.** Decoding by linear programming. *IEEE Trans. on Information Theory,* December 2005, vol. 51 (12), 4203-4215
- **P.H. TAN ; L.K. RASMUSSEN.** The application of semidefinite programming for detection in CDMA. *IEEE Journal on Select. Areas Commun.,* August 2001, vol. 19 (8), 1442-1449
- Implementation of quasi-maximum-likelihood detection based on semidefinite relaxation and linear programming. **LEV RAPOPORT et al.** ELECTRICAL & ELECTRONICS ENGINEERS IN ISRAEL (IEEEI), 2012 IEEE 27TH CONVENTION OF. IEEE, 14 November 2012, 1-5
- Detection of sparse signals under finite-alphabet constraints. **ZHI TIAN et al.** ACOUSTICS, SPEECH AND SIGNAL PROCESSING, 2009. ICASSP 2009. IEEE INTERNATIONAL CONFERENCE ON. IEEE, 19 April 2009, 2349-2352